# FASCICULE DE BREVET EUROPEEN

(11) **EP 1 406 026 B1**
(45) Date de publication et mention de la délivrance du brevet: **30.03.2005**
(21) Numéro de dépôt: 03292056.3
(22) Date de dépôt: 20.08.2003
(51) Int. Cl.: F16C 39/04, F16C 19/16, F16C 33/66, F01D 25/16, F01D 25/18

(54) **Palier à roulement amorti à l'huile**
Ölfilmgedämftes Wälzlager
Oil-film damped roller bearing

(30) Priorité: 01.10.2002 FR 0212107
(43) Date de publication de la demande: 07.04.2004
(73) Titulaire: SNECMA MOTEURS, 75015 Paris (FR)
(72) Inventeur: Dusserre-Telmon, Guy, 77115 Sivry-Courtry (FR); Plona, Daniel, 77870 Vulaines sur seine (FR)
(74) Mandataire: Joly, Jean-Jacques

(56) Documents cités:
- US-A- 4 479 682
- US-A- 4 693 616
- US-A- 4 721 398
- PATENT ABSTRACTS OF JAPAN vol. 2002, no. 02, 2 avril 2002 (2002-04-02) & JP 2001 295610 A (HONDA MOTOR CO LTD), 26 octobre 2001 (2001-10-26)

## Description

La présente invention est relative à un palier à roulement muni d'un film d'huile sous pression du type « squeeze film » et destiné à être utilisé notamment dans le domaine aéronautique.

Les paliers à roulement sont couramment utilisés dans le domaine aéronautique. En effet, une turbomachine aéronautique comporte des paliers à roulement pour supporter en rotation un premier arbre par rapport à un second arbre coaxial au premier. Par exemple, de tels paliers peuvent être disposés entre les arbres de la turbine haute-pression et de la turbine basse-pression de la turbomachine. Ces paliers à roulement sont essentiellement constitués de billes ou de rouleaux retenus dans des pistes de roulement formés par des bagues extérieure et intérieure. On utilise généralement des paliers à roulement à billes pour tenir aux charges axiales et des paliers à roulement à rouleaux pour tenir aux charges radiales de la turbomachine.

Afin d'obtenir un fonctionnement satisfaisant des paliers à roulement de ce type, il est nécessaire d'assurer, d'une part, la lubrification et le refroidissement des roulements et, d'autre part, l'amortissement des vibrations des arbres et des roulements.

De façon connue en soi, la lubrification et le refroidissement des roulements sont réalisés en injectant de l'huile entre les bagues du roulement. Plus précisément, de l'huile est acheminée entre les bagues de roulement à partir d'un circuit d'alimentation en huile relié à un ou plusieurs orifices percés dans la bague intérieure du palier. L'huile est ensuite refoulée ou centrifugée vers l'extérieur du palier en évacuant par transfert calorique la chaleur produite par les roulements. En outre, afin de réduire les vibrations engendrées par la rotation élevée des arbres de la turbomachine supportés par ces paliers, de l'huile sous pression est par ailleurs confinée entre la bague extérieure et une pièce de structure du palier via le même circuit d'alimentation. L'huile sous pression qui est ainsi présente à la surface de contact entre la bague extérieure et la pièce de structure du palier sous la forme d'un film d'huile permet de jouer un rôle d'amortisseur des vibrations. Deux joints annulaires d'étanchéité interposés entre la bague extérieure et la pièce de structure du palier délimitent latéralement ce film d'huile.

Un problème d'alimentation en huile sous pression du film formant amortisseur de vibrations se pose lorsqu'il s'agit d'un palier à roulement disposé entre deux arbres tournant, par exemple entre les arbres de la turbine basse-pression et de la turbine haute-pression d'une turbomachine. En effet, dans cette situation, il est difficile d'alimenter convenablement le film d'huile par l'intermédiaire d'un circuit d'alimentation classique. En particulier, l'aménagement au niveau de l'arbre concerné d'un circuit d'alimentation comprenant des écopes de récupération, des conduits d'alimentation et une pompe s'avère délicat à réaliser.

A ce problème, le brevet US 4,693,616 propose une solution qui consiste à utiliser la pression générée par la mise en charge centrifuge de l'huile de lubrification du roulement pour alimenter le film d'huile d'amortissement. Pour cela, un orifice débouchant au niveau de la surface de contact entre la bague extérieure et la pièce de structure du palier est percé dans la bague extérieure. Sous l'effet de la force centrifuge engendrée par la rotation des arbres, l'huile injectée entre les bagues du roulement pénètre alors via cet orifice dans l'espace compris entre la bague extérieure et la pièce de structure pour former le film d'huile.

Cependant, la solution décrite dans ce brevet ne permet pas de générer des pressions suffisamment élevées à l'intérieur du film d'huile, ce qui pose des problèmes de remplissage et favorise les phénomènes de cavitation au sein du film d'huile. De tels problèmes ont pour effet d'affecter le rendement des turbines de la turbomachine.

### Objet et résumé de l'invention

La présente invention a donc pour objet un palier à roulement pour turbomachine dont la réalisation permet d'assurer la lubrification et le refroidissement du roulement, d'une part, et l'amortissement des vibrations par film d'huile, d'autre part, en générant des pressions suffisamment élevées pour pallier les inconvénients de l'art antérieur.

A cet effet, il est prévu un palier à roulement de turbomachine supportant en rotation un premier arbre par rapport à un second arbre et comportant une pluralité d'éléments de roulement engagés entre une bague annulaire intérieure montée sur le second arbre et une bague annulaire extérieure montée sur le premier arbre, une face interne de la bague extérieure et une face externe de la bague intérieure définissant entre elles un espace annulaire, un film d'huile formé au niveau d'une surface de contact annulaire entre la bague extérieure et le premier arbre et délimité latéralement par au moins deux joints annulaires d'étanchéité, au moins un conduit traversant la bague intérieure, le conduit communiquant avec un circuit d'alimentation en huile et débouchant au niveau d'une piste interne de roulement des éléments de roulement afin d'assurer leur lubrification, et au moins un conduit supplémentaire traversant la bague intérieure, le conduit supplémentaire communiquant avec le circuit d'alimentation en huile et débouchant à l'extérieur de la piste interne de roulement pour alimenter en huile au travers de la bague extérieure le film d'huile sous l'effet de la force centrifuge engendrée par la rotation du second arbre, le palier étant caractérisé en ce que la bague extérieure comporte un épaulement annulaire faisant saillie radialement vers l'intérieur de l'espace annulaire, l'épaulement comportant au moins un canal s'ouvrant sensiblement en regard du conduit supplémentaire et débouchant au niveau du film d'huile.

La présence d'un canal pratiqué dans un épaulement de la bague extérieure permet de générer des pressions élevées à l'intérieur du film d'huile et donc d'améliorer son remplissage et de limiter les phénomènes de cavitation. De préférence, l'épaulement annulaire présente une hauteur radiale au moins deux fois supérieure à une hauteur radiale de la bague annulaire extérieure.

Le circuit d'alimentation en huile comporte au moins une cavité pratiquée dans le second arbre au niveau d'une surface de contact annulaire avec la bague intérieure, cette cavité étant alimentée en huile à partir d'une buse d'injection et le conduit s'ouvrant dans celle-ci. En outre, le circuit d'alimentation en huile comporte une cavité supplémentaire pratiquée dans le second arbre au niveau de sa surface de contact annulaire avec la bague intérieure, la cavité supplémentaire étant alimentée en huile à partir de la cavité avec laquelle elle communique et le conduit supplémentaire s'ouvrant dans la cavité supplémentaire.

Avantageusement, le canal de l'épaulement annulaire débouche au niveau du film d'huile par l'intermédiaire d'une gorge d'homogénéisation pratiquée dans la bague extérieure au niveau de sa surface de contact annulaire avec le premier arbre.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif, et sur lesquels :
- la figure 1 est une vue schématique en coupe longitudinale de la partie d'une turbomachine comportant un palier à roulement selon l'invention ; et
- la figure 2 est un graphique illustrant deux courbes de pression pour un palier à roulement de l'art antérieur et pour un palier à roulement selon l'invention.

### Description détaillée d'un mode de réalisation

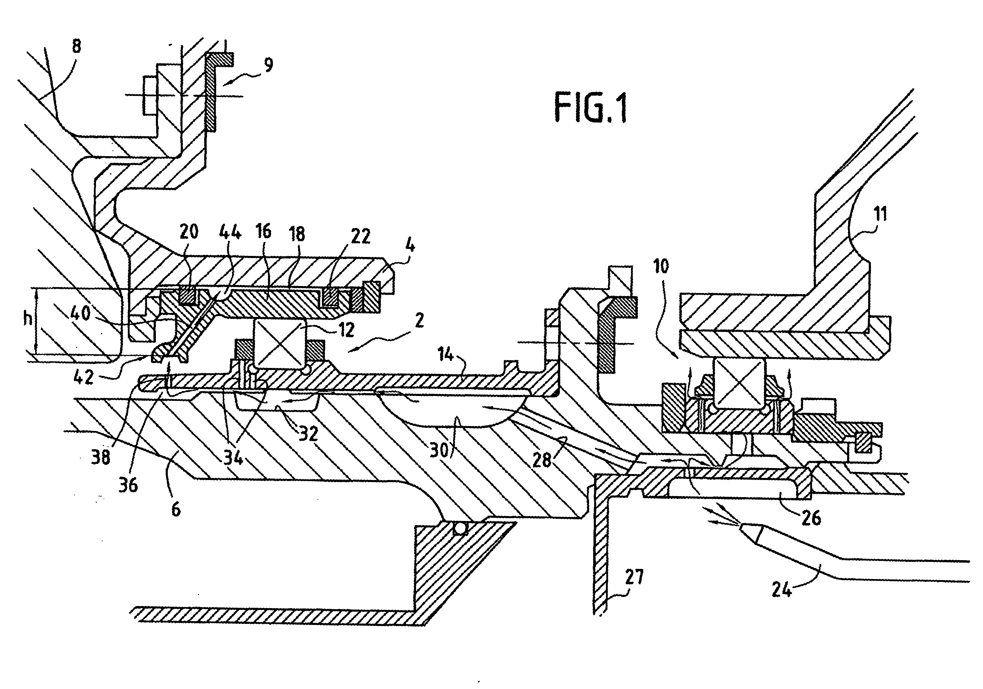

La figure 1 représente une partie d'une turbomachine en coupe longitudinale comportant un palier à roulement selon un mode préférentiel de réalisation de l'invention.

Le palier à roulement 2 est disposé entre un premier arbre 4 qui est le tourillon de la ligne d'arbre du corps haute-pression de la turbomachine et un second arbre 6 qui est le tourillon de la ligne d'arbre du corps basse-pression. Le premier arbre 4 est fixé à la turbine haute-pression 8 de la turbomachine par l'intermédiaire d'une attache 9. Un autre palier à roulement 10 est également représenté sur la figure 1. Ce palier qui supporte en rotation le second arbre 6 par rapport à un carter 11 de la turbomachine ne fait pas l'objet de la présente invention et ne sera donc pas décrit en détail.

Le palier à roulement 2 est constitué d'une pluralité de rouleaux 12 engagés entre des faces internes d'une bague annulaire intérieure 14 et d'une bague annulaire extérieure 16 formant des pistes de roulement. La bague intérieure 14 est montée sur le second arbre 6. De même, le premier arbre 4 est fixé mécaniquement à une face externe de la bague extérieure 16.

Afin d'amortir les efforts transmis du second arbre 6 vers le premier arbre 4, le palier de roulement est muni d'un film d'huile 18. Ce film d'huile formant amortisseur de vibrations est formé au niveau de la surface de contact annulaire entre le premier arbre 4 et la face externe de la bague extérieure 16. Il est délimité latéralement par deux joints d'étanchéité 20, 22 placés dans deux gorges usinées dans la bague extérieure à sa surface de contact avec le premier arbre 4.

L'huile nécessaire à la lubrification et au refroidissement des rouleaux 12 est fournie par une buse 24 injectant de l'huile dans un circuit de circulation. Ce circuit de circulation de l'huile comporte une gorge collectrice 26 pratiquée dans une paroi 27 d'un distributeur d'huile. Cette gorge permet d'alimenter en huile de lubrification les deux paliers à roulement 2 et 10 représentés sur la figure 1. En ce qui concerne le palier à roulement 2 qui fait l'objet de la présente invention, un passage 28 relié à la première gorge collectrice 26 est pratiqué dans le second arbre 6 et débouche au niveau d'une première cavité 30 aménagée dans le second arbre, à sa surface de contact annulaire avec la bague intérieure 14. Cette première cavité 30 communique plus en aval, dans le sens de circulation de l'huile, avec une deuxième cavité 32, également pratiquée dans le second arbre à sa surface de contact annulaire avec la bague intérieure. Un ou plusieurs conduits 34 d'alimentation traversant la bague intérieure 14 du palier s'ouvrent dans la deuxième cavité 32 et débouchent au niveau de la piste interne de roulement des rouleaux 12. Ces conduits (au nombre de deux sur la figure 1) permettent ainsi d'alimenter en huile de lubrification et de refroidissement les rouleaux du palier 2.

Il est également prévu une troisième cavité ouverte 36 d'admission d'huile à partir de laquelle de l'huile est acheminée vers le film d'huile 18. Cette troisième cavité 36 est disposée en aval de la deuxième cavité 32 dans le sens de circulation de l'huile au niveau de la surface de contact annulaire entre le second arbre 6 et la bague intérieure 14. Un conduit supplémentaire 38 traversant la bague intérieure s'ouvre dans cette troisième cavité 36 et débouche à l'extérieur de la piste interne de roulement des rouleaux 12. Sur la figure 1, un unique conduit supplémentaire 38 est représenté. On peut également imaginer d'autres passages dans la bague intérieure pour acheminer l'huile vers le film d'huile.

Selon l'invention, la bague extérieure 16 du palier à roulement comporte au moins un canal 40 d'alimentation en huile du film 18. Ce canal qui traverse la bague extérieure 16 s'ouvre sensiblement en regard du conduit supplémentaire 38 pratiqué dans la bague intérieure et débouche entre les deux joints d'étanchéité 20, 22 au niveau de la surface de contact annulaire entre la bague extérieure et le premier arbre 4. Plus précisément, la bague extérieure 16 présente, au niveau de son extrémité en regard du conduit supplémentaire 38, un épaulement annulaire 42 faisant saillie radialement vers l'espace annulaire défini entre les deux bagues du palier. L'épaulement 42 présente une hauteur radiale suffisante pour que le canal d'alimentation 40 aménagé dans cet épaulement s'ouvre au regard du conduit supplémentaire 38. En effet, à vitesses égales de rotation du second arbre, la pression générée à l'intérieur du film varie en fonction de la distance séparant le conduit supplémentaire et l'extrémité amont du canal. Ainsi, afin de générer à l'intérieur du film d'huile des pressions convenablement élevées pour un régime partiel de fonctionnement de la turbomachine - c'est à dire de l'ordre de 6 bar contre 2 bar pour un palier à roulement amorti de l'art antérieur - la hauteur de charge h (définie par la hauteur radiale de l'épaulement 42) est avantageusement au moins deux fois, et de préférence trois fois, supérieure à la hauteur de charge d'un palier à roulement amorti de l'art antérieur (définie par la hauteur radiale de la bague extérieure du palier).

Selon une caractéristique avantageuse de l'invention, le canal d'alimentation 40 débouche au niveau du film d'huile par l'intermédiaire d'une gorge d'homogénéisation 44 pratiquée dans la bague extérieure, au niveau de sa surface de contact annulaire avec le premier arbre afin de faciliter la répartition de l'huile dans tout l'espace annulaire délimité par les deux joints d'étanchéité 20, 22.

On décrira maintenant le fonctionnement du palier selon invention, et plus particulièrement la circulation de l'huile destinée à lubrifier, à refroidir les rouleaux et à alimenter le film d'huile.

L'huile est injectée par la buse 24 au niveau de la gorge collectrice 26. Elle traverse ensuite le passage 28 pratiqué dans le second arbre 6 avant de pénétrer dans la première cavité 30 puis dans la deuxième cavité 32. A cet endroit, l'huile est répartie suivant deux circuits séparés :
- d'une part, par effet de la force centrifuge engendrée par la rotation du second arbre, l'huile traverse la bague intérieure 14 par le ou les conduits 34 afin d'assurer le refroidissement et la lubrification des rouleaux 12 ; et
- d'autre part, l'huile arrive dans la troisième cavité 36, traverse la bague intérieure par le conduit supplémentaire 38 et, toujours par effet centrifuge, pénètre dans le canal d'alimentation 40 aménagé dans l'épaulement 42 de la bague extérieure afin d'alimenter en huile sous pression le film d'huile 18 assurant l'amortissement des vibrations.

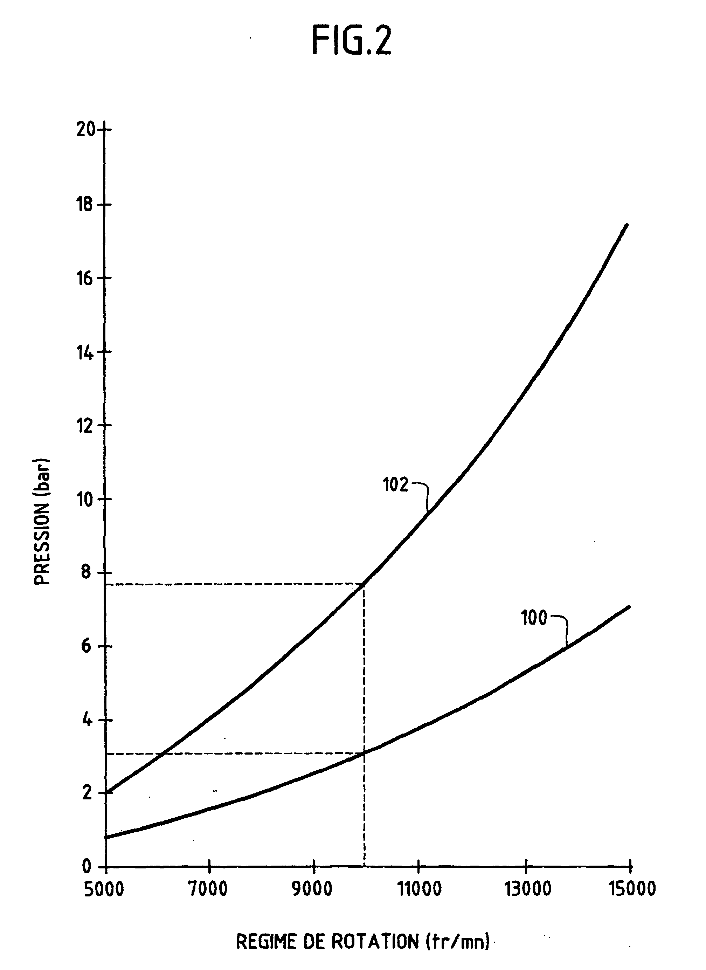

La présence de l'épaulement 42 de la bague extérieure faisant saillie radialement vers l'espace annulaire défini entre les deux bagues permet d'obtenir des pressions à l'intérieur du film d'huile 18 nettement plus élevées que celles obtenues par un palier à roulement amorti de l'art antérieur. La figure 2 illustre bien cette différence notable. Sur cette figure, les courbes 100 et 102 représentent la pression de l'huile générée à l'intérieur du film d'huile en fonction de la vitesse de rotation du second arbre (correspondant au tourillon de la ligne d'arbre du corps basse-pression de la turbomachine), respectivement pour un palier à roulement de l'art antérieur et un palier à roulement selon l'invention. Ainsi, pour une vitesse de rotation du second arbre de l'ordre de 10000 tours par minute par exemple, un palier à roulement classique permet d'obtenir une pression à l'intérieur du film d'huile de 3 bar environ, tandis que pour la même vitesse, le palier selon l'invention génère une pression de presque 8 bar. Une telle pression dans le film d'huile limite les phénomènes de cavitation et permet donc d'obtenir un amortissement des vibrations beaucoup plus efficace qu'avec un palier à roulement amorti classique.

## Revendications

1. Palier à roulement de turbomachine supportant en rotation un premier arbre (4) par rapport à un second arbre (6) et comportant :
une pluralité d'éléments de roulement (12) engagés entre une bague annulaire intérieure (14) montée sur le second arbre et une bague annulaire extérieure (16) montée sur le premier arbre, une face interne de ladite bague extérieure et une face externe de ladite bague intérieure définissant entre elles un espace annulaire,
un film d'huile (18) formé au niveau d'une surface de contact annulaire entre ladite bague extérieure et ledit premier arbre et délimité latéralement par au moins deux joints annulaires d'étanchéité (20, 22),
au moins un conduit (34) traversant ladite bague intérieure, ledit conduit communiquant avec un circuit d'alimentation en huile et débouchant au niveau d'une piste interne de roulement desdits éléments de roulement afin d'assurer leur lubrification, et
au moins un conduit supplémentaire (38) traversant ladite bague intérieure, ledit conduit supplémentaire communiquant avec ledit circuit d'alimentation en huile et débouchant à l'extérieur de la piste interne de roulement pour alimenter en huile au travers de ladite bague extérieure ledit film d'huile sous l'effet de la force centrifuge engendrée par la rotation dudit second arbre,
ledit palier étant **caractérisé en ce que** ladite bague extérieure comporte un épaulement annulaire (42) faisant saillie radialement vers l'intérieur dudit espace annulaire, ledit épaulement comportant au moins un canal (40) s'ouvrant sensiblement en regard dudit conduit supplémentaire et débouchant au niveau dudit film d'huile.

2. Palier selon la revendication 1, **caractérisé en ce que** ledit épaulement annulaire (42) présente une hauteur radiale au moins deux fois supérieure à une hauteur radiale de ladite bague annulaire extérieure (16).

3. Palier selon l'une des revendications 1 et 2, **caractérisé en ce que** le circuit d'alimentation en huile comporte au moins une cavité (30, 32) pratiquée dans le second arbre (6) au niveau d'une surface de contact annulaire avec la bague intérieure (14), ladite au moins une cavité étant alimentée en huile à partir d'une buse d'injection (24) et ledit au moins un conduit s'ouvrant dans ladite au moins une cavité.

4. Palier selon la revendication 3, **caractérisé en ce que** ledit circuit d'alimentation en huile comporte en outre une cavité supplémentaire (36) pratiquée dans le second arbre (6) au niveau de sa surface de contact annulaire avec la bague intérieure (14), ladite cavité supplémentaire étant alimentée en huile à partir de ladite au moins une cavité (30, 32) avec laquelle elle communique et ledit au moins un conduit supplémentaire s'ouvrant dans ladite au moins une cavité supplémentaire.

5. Palier selon l'une quelconque des revendications 1 à 4, **caractérisé en ce que** ledit au moins un canal (40) de l'épaulement annulaire (42) débouche au niveau du film d'huile (18) par l'intermédiaire d'une gorge d'homogénéisation (44) pratiquée dans la bague extérieure (16) au niveau de sa surface de contact annulaire avec le premier arbre (4).

6. Palier selon l'une quelconque des revendications 1 à 5, **caractérisé en ce que** le premier arbre (4) est un tourillon de la ligne d'arbre du corps haute-pression de la turbomachine et le second arbre (6) est un tourillon de la ligne d'arbre du corps basse-pression de la turbomachine, les éléments de roulement (12) étant des rouleaux.

## Patentansprüche

1. Turbomaschinenwälzlager, das eine erste Welle (4) gegenüber einer zweiten Welle (6) drehlagert und folgendes umfaßt:
eine Vielzahl von Wälzkörpern (12), die zwischen einem an der zweiten Welle angebrachten, ringförmigen Innenring (14) und einem an der ersten Welle angebrachten, ringförmigen Außenring (16) eingefügt sind, wobei eine Innenfläche des Außenrings und eine Außenfläche des Innenrings zwischen sich einen ringförmigen Raum definieren,
einen Ölfilm (18), der im Bereich einer ringförmigen Kontaktfläche zwischen dem Außenring und der ersten Welle gebildet und seitlich durch wenigstens zwei ringförmige Dichtungen (20, 22) begrenzt ist,
wenigstens eine den Innenring durchquerende Leitung (34), wobei die genannte Leitung mit einem Ölversorgungskreis in Verbindung steht und im Bereich einer Innenlaufbahn der Wälzkörper mündet, um deren Schmierung sicherzustellen, und
wenigstens eine zusätzliche Leitung (38), welche den Innenring durchquert, wobei die genannte zusätzliche Leitung mit dem Ölversorgungskreis in Verbindung steht und außerhalb der Innenlaufbahn mündet, um unter der Wirkung der durch die Rotation der zweiten Welle erzeugten Zentrifugalkraft den Ölfilm durch den genannten Außenring mit Öl zu versorgen,
wobei das Lager **dadurch gekennzeichnet ist, daß** der Außenring eine ringförmige Schulter (42) aufweist, die radial zum Inneren des ringförmigen Raums hin vorspringt, wobei die Schulter wenigstens einen Kanal (40) aufweist, der sich im Wesentlichen gegenüber der zusätzlichen Leitung öffnet und im Bereich des Ölfilms mündet.

2. Lager nach Anspruch 1, **dadurch gekennzeichnet, daß** die ringförmige Schulter (42) eine radiale Höhe aufweist, die wenigstens zweimal größer ist als eine radiale Höhe des ringförmigen Außenrings (16).

3. Lager nach einem der Ansprüche 1 und 2, **dadurch gekennzeichnet, daß** der Ölversorgungskreis wenigstens einen Hohlraum (30, 32) aufweist, der in der zweiten Welle (6) im Bereich einer ringförmigen Kontaktfläche mit dem Innenring (14) ausgebildet ist, wobei der wenigstens eine Hohlraum mittels einer Spritzdüse (24) mit Öl versorgt wird und wobei die wenigstens eine Leitung sich in den wenigstens einen Hohlraum öffnet.

4. Lager nach Anspruch 3, **dadurch gekennzeichnet, daß** der Ölversorgungskreis außerdem einen zusätzlichen Hohlraum (36) aufweist, der in der zweiten Welle (6) im Bereich seiner ringförmigen Kontaktfläche mit dem Innenring (14) ausgebildet ist, wobei der zusätzliche Hohlraum aus dem wenigstens einen Hohlraum (30, 32), mit dem er in Verbindung steht, mit Öl versorgt wird und wobei die wenigstens eine zusätzliche Leitung sich in den wenigstens einen zusätzlichen Hohlraum öffnet.

5. Lager nach irgendeinem der Ansprüche 1 bis 4, **dadurch gekennzeichnet, daß** der wenigstens eine Kanal (40) der ringförmigen Schulter (42) über eine Homogenisierungsnut (44), die in dem Außenring (16) im Bereich seiner ringförmigen Kontaktfläche mit der ersten Welle (4) ausgebildet ist, im Bereich des Ölfilms (18) mündet.

6. Lager nach irgendeinem der Ansprüche 1 bis 5, **dadurch gekennzeichnet, daß** die erste Welle (4) ein Lagerzapfen des Wellenstrangs des Hochdruckkörpers der Turbomaschine ist und daß die zweite Welle (6) ein Lagerzapfen des Wellenstrangs des Niederdruckkörpers der Turbomaschine ist, wobei die Wälzkörper (12) Rollen sind.

## Claims

1. A rolling bearing for a turbomachine to support a first shaft (4) rotatably relative to a second shaft (6), and comprising:
a plurality of rolling elements (12) engaged between an inner annular ring (14) mounted on the second shaft and an outer annular ring (16) mounted on the first shaft, an inside face of said outer ring and an outside face of said inner ring defining between them an annular space;
an oil film (18) formed on an annular contact surface between said outer ring and said first shaft and defined laterally by at least two annular sealing rings (20, 22);
at least one duct (34) passing through said inner ring, said duct communicating with an oil feed circuit and opening out into an inner race for said rolling elements in order to lubricate them; and
at least one additional duct (38) passing through said inner ring, said additional duct communicating with said oil feed circuit and opening out to the outside of the inner race in order to feed oil through said outer ring to said oil film under the effect of the centrifugal force generated by the rotation of said second shaft;
said bearing being **characterised in that** said outer ring includes an annular shoulder (42) projecting radially towards the inside of said annular space, said shoulder including at least one channel (40) opening out substantially in register with said additional duct and opening out into said oil film.

2. A bearing according to claim 1, **characterised in that** said annular shoulder (42) presents radial height that is at least twice the radial height of said outer annular ring (16).

3. A bearing according to claim 1 or claim 2, **characterised in that** the oil feed circuit includes at least one cavity (30, 32) formed in the second shaft (6) in an annular contact surface with the inner ring (14), said at least one cavity being fed with oil from an injection nozzle (24) and said at least one duct opening out into said at least one cavity.

4. A bearing according to claim 3, **characterised in that** said oil feed circuit further comprises an additional cavity (36) formed in the second shaft (6) in its annular contact surface with the inner ring (14), said additional cavity being fed with oil from said at least one cavity (30, 32) with which it communicates, and said at least one additional duct opening out into said at least one additional cavity.

5. A bearing according to any one of claims 1 to 4, **characterised in that** said at least one channel (40) of the annular shoulder (42) opens out into the oil film (18) via a homogenizing groove (44) formed in the outer ring (16) in its annular contact surface with the first shaft (4).

6. A bearing according to any one of claims 1 to 5, **characterised in that** the first shaft (4) is a trunion of the shaft line of the high pressure spool of the turbomachine, and the second shaft (6) is a trunion of the shaft line of the low pressure spool of the turbomachine, the rolling elements (12) being rollers.
